Europäisches Patentamt

European Patent Office

Office européen des brevets

Veröffentlichungsnummer: **0 556 629 B1**

## EUROPÄISCHE PATENTSCHRIFT

Veröffentlichungstag der Patentschrift: **20.12.95**

Int. Cl.⁶: **F16F 9/30**, E04H 9/02

Anmeldenummer: **93101555.6**

Anmeldetag: **02.02.93**

Horizontal und vertikal wirkender viskoser Schwingungsdämpfer

Priorität: **12.02.92 DE 4204129**

Veröffentlichungstag der Anmeldung:
**25.08.93 Patentblatt 93/34**

Bekanntmachung des Hinweises auf die
Patenterteilung:
**20.12.95 Patentblatt 95/51**

Benannte Vertragsstaaten:
**DE FR GB**

Entgegenhaltungen:
**WO-A-90/10802**
**US-A- 3 911 199**

**DATABASE WPIL Week 8740, Derwent Publications Ltd., London, GB; AN 87-282999 &
SU-A-1 295 079**

Patentinhaber: **GERB Schwingungsisolierungen GmbH & Co. KG
Roedernallee 174-176,
Postfach 51 02 30
D-13362 Berlin (DE)**

Erfinder: **Delam, Heinz
Blankenheideweg 3
W-1000 Berlin 20 (DE)**
Erfinder: **Weber, Frank-Michael, Dipl.-Phys.
Luitpoldstrasse 45
W-1000 Berlin 30 (DE)**

Vertreter: **Alber, Norbert et al
Patent- und Rechtsanwälte
Hansmann, Vogeser, Dr. Boecker,
Alber, Dr. Strych, Liedl
Albert-Rosshaupter-Strasse 65
D-81369 München (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

**Beschreibung**

Die Erfindung betrifft einen horizontal und vertikal wirkenden viskosen Schwingungsdämpfer gemäß Oberbegriff des Anspruchs 1. Ein derartiger Schwingungsdämpfer ist aus der SU-A-1 295 079 bekannt.

Bei einem aus WO 90/10802 bekannten Dämpfer sind zwischen der Innenwand des zylindrischen Dämpfergehäuses und dem zylindrischen oder becherförmigen Dämpferstempel zylindrische Rohre einander umgebend und gegenseitig verschiebbar eingesetzt. Das Dampfergehäuse ist mit seiner Bodenplatte an einem Festpunkt angebracht, während der Dämpferstempel über eine obere Platte mit dem zu schützenden Objekt verbunden ist. Treten zwischen Festpunkt und Objekt Relativbewegungen auf, so entwickelt der Schwingungsdämpfer Kräfte, die zur Geschwindigkeit dieser Bewegung weitgehend proportional sind. Wichtigste Kenngröße viskoser Dämpfer dieser Art ist der Dämpfungswiderstand W, der die Dämpferkraft F mit der Geschwindigkeit v nach der Formel $F = W^*v$ verbindet.

Eine ausreichende Dämpfungswirkung kommt bei diesem Schwingungsdämpfer nur dann zustande, wenn die Bewegung rechtwinklig zur Zylinderachse des Dämpfergehäuses bzw. der Rohre erfolgt, also einer Horizontalbewegung entspricht, während es bei einer vertikalen Bewegung sehr leicht zu Aufwärtsbewegungen der Rohre kommt, wobei sich dann der Dämpfungswiderstand in vertikaler Richtung einem Wert nähert, der auch ohne die Rohre erreicht wird.

Ein ähnlicher Effekt ergibt sich auch dann, wenn sehr große horizontale Relativbewegungen auftreten. Das viskose Dämpfungsmedium wird nämlich dabei am Rand des Dämpfergehäuses nach oben gedruckt und kann je nach Viskosität des Dämpfungsmediums und der jeweiligen Dämpfergeometrie nur relativ langsam zurückfließen. Legt man z.B. eine sinusförmige Anregung zugrunde, so wird mit jedem Lastzyklus das Dämpfungsmedium weiter nach oben gedrückt. Im Versuch wurde beobachtet, daß auch die frei beweglichen Rohre im Inneren des Dämpfergehäuses mit dem Dämpfungsmedium nach oben gedrückt werden, wobei die Leistung des Dämpfers rasch abnimmt.

Der Erfindung liegt die Aufgabe zugrunde, den Schwingungsdämpfer der eingangs angegebenen Gattung so auszubilden, daß die Dämpfungswirkung bei beliebigen Anregungen bzw. Bewegungsverläufen nicht reduziert wird.

Diese Aufgabe wird erfindungsgemäß durch die Merkmale des kennzeichnenden Teils des Anspruchs 1 gelöst.

Durch diese Ausbildung wird verhindert, daß das mindestens eine Rohr im Inneren des Dämpfergehäuses von der Bodenfläche des Dämpfergehäuses bei bestimmten Anregungsbedingungen abgehoben wird, so daß dadurch sichergestellt wird, daß die Dämpfungswirkung unabhängig von der jeweiligen Art der Anregung bzw. Schwingungsbeweguflg erhalten bleibt.

Vorteilhafte Ausgestaltungen der Erfindung ergeben sich aus den Unteransprüchen.

Die Abstützteile können zweckmäßigerweise als Ringflansch ausgebildet sein. Dabei sind für den Fall der Verwendung von mehreren Rohren der Ringflansch des innersten Rohres nach außen und alle übrigen Ringflansche nach innen auszurichten.

Bei Verwendung von mehreren Rohren, die einander mit Abstand umgeben und wobei die mit viskosem Dämpfungsmedium gefüllten Zwischenräume zwischen den Rohren mindestens teilweise gefüllt sein können, sollten die Durchmesser der freien Umfangsbereiche der Ringflansche so bemessen sein, daß der freie Umfangsbereich jedes Ringflansches gegen den benachbarten Ringflansch bzw. dessen freien Umfangsbereich anliegt.

Insbesondere soll der Außendurchmesser des Ringflansches eines Rohres größer sein als der Innendurchmesser des Flansches des in radialer Richtung nach außen unmittelbar folgenden Rohres sein. In allen Fällen jedoch dient der Ringflansch der Umlaufwand des Dämpfergehäuses als Widerlager zur axialen Abstützung der Rohre.

Eine weitere Ausführungsform besteht ferner darin, daß zwar wiederum mehrere Rohre mit Abstand und konzentrisch zueinander im Dämpfergehäuse angeordnet sind, daß jedoch die Abstützteile aller Rohre als eine allen Rohren gemeinsame einstückige Ringscheibe und das Abstützteil der Umlaufwand als nach innen gerichteter Ringflansch ausgebildet sind, wobei die Durchmesser der einander zugewandten Ränder der Ringscheibe und des Ringflansches so bemessen sind, daß beide Teile mit ihren freien Umfangsbereichen gegeneinander anliegen.

Diese Ausführungsform zeichnet sich durch eine besonders einfache Konstruktion aus, wobei die einstückige Ringscheibe verdreh- und verschiebbar ist.

Bei der zweiten Ausführungsform ist die Ringscheibe mit radialem Spiel im Dämpfergehäuse angeordnet, wobei der Dämpferstempel mit radialem Spiel durch die Ringscheibe hindurchragt.

Im übrigen kann die einstückige Ringscheibe eine längliche Aussparung aufweisen, die sich durch das Zentrum der Ringscheibe hindurch erstreckt, wodurch eine große Horizontalbewegung in Längsrichtung der Aussparung ermöglicht ist.

Der Ringflansch der Umlaufwand dient auch bei der zweiten Ausführungsform als Widerlager gegen eine aufwärts gerichtete Bewegung der Rohre.

Bei beiden Ausführungsformen kann jedes Rohr mit einem Boden versehen sein, wobei die Böden aufeinander aufliegen.

Sowohl bei der ersten als auch bei der zweiten Ausführungsform können dann, nämlich bei Ausstattung der Rohre mit Böden, die Zwischenräume zwischen den Rohren sowie dem äußersten Rohr und der Umlaufwand dem innersten Rohr und dem Dämpferstempel mit Dämpfungsmedien unterschiedlicher Dämpfungscharakteristik, insbesondere Viskosität, gefüllt sein.

Schließlich können bei allen Ausführungsformen die Rohre radiale Durchtrittsöffnungen für das Dämpfungsmedium aufweisen, deren Größe in Abhängigkeit von der gewünschten Dämpfungscharakteristik bemessen ist.

Im folgenden wird die Erfindung weiter ins Detail gehend und ausschließlich beispielhaft unter Bezugnahme auf die Zeichnungen beschrieben; in diesen zeigen:

Fig. 1 einen Radialschnitt durch einen Dämpfer einer ersten Ausführungsform,

Fig. 2 einen Radialschnitt durch einen Dämpfer in der Ausführung nach Fig. 1, wobei jedoch jedes Rohr mit einer Bodenplatte ausgestattet ist,

Fig. 3 einen Radialschnitt durch einen Dämpfer einer zweiten Ausführungsform,

Fig. 4 einen Radialschnitt durch den Dämpfer nach Fig. 3, wobei jedoch wiederum jedes Rohr mit einer Bodenplatte ausgestattet ist, und

Fig. 5 eine Ansicht von oben auf den Dämpfer der Fig. 3 und 4 unter Weglassung der Deckplatte des Dämpferstempels.

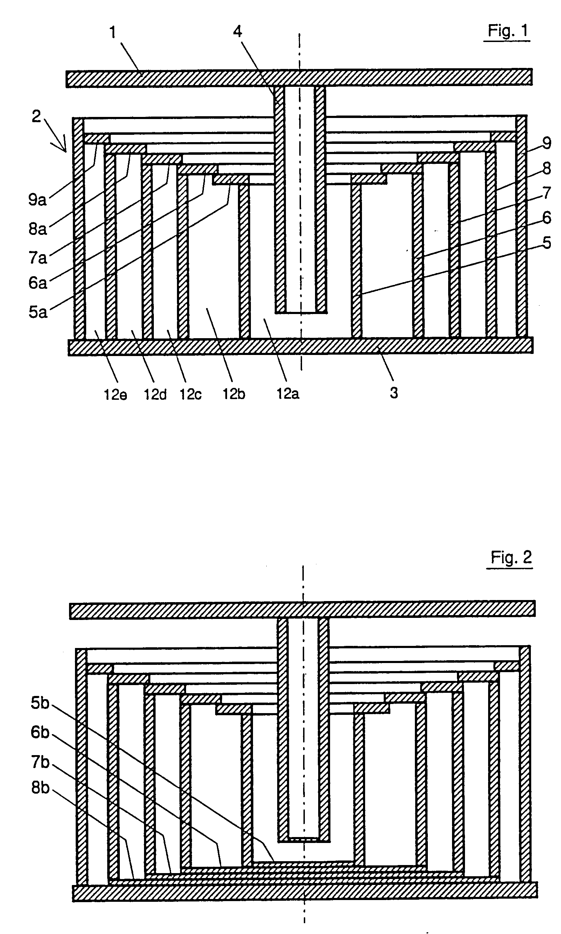

Gemäß Fig. 1 besteht der Schwingungsdämpfer aus einem Dämpfergehäuse 2, dessen zylindrische Umlaufwand 9 mit einer Bodenplatte 3 fest verbunden ist, und aus einem Dämpferstempel 4 mit zugehöriger Deckplatte 1.

Im Inneren des Dämpfergehäuses 2 sind im dargestellten Fall vier konzentrische Rohre 5 bis 8 kreisrunden Querschnitts angeordnet, die auf der Bodenplatte 3 aufliegen und horizontal zweidimensional gegeneinander frei verschiebbar sind. Der Ringraum 12a zwischen dem innersten Rohr 5 und dem Dämpferstempel 4 sowie die Ringräume 12b bis 12d zwischen den Rohren 5 bis 8 und der Ringraum 12e zwischen dem äußersten Rohr 8 der Umlaufwand 9 sind mit viskosem Dämpfungsmedium (nicht gezeigt) gefüllt. In das im Ringraum 12a befindliche Dämpfungsmedium ragt der Dämpferstempel 4 von oben her hinein.

Erforderlichenfalls kann ein Ausgleich des in den verschiedenen Teilräumen befindlichen und verdrängten Dämpfungsmediums bei größerer Füllhöhe über die oberen freien Ränder der Rohre 5 bis 8 hinweg und bei geringerer Füllhöhe durch für diesen Fall vorgesehene, nicht dargestellte Durchtrittsöffnungen in den einzelnen Rohren 5 bis 8 erfolgen.

Bei dem gezeigten Ausführungsbeispiel ist jedes Rohr 5 bis 8 an seinem oberen Randbereich mit einem Ringflansch 5a bis 8a als Abstützteil ausgestattet, wobei der Ringflansch 5a des innersten Rohres 5 radial nach außen und die Ringflansche 6a bis 8a der übrigen Rohre 6 bis 8 radial nach innen ausgerichtet sind.

Wie Fig. 1 auch erkennen läßt, sind die Außen- und Innendurchmesser der Ringflansche 5a bis 8a so aufeinander abgestimmt, daß sich die Ringflansche aufeinanderfolgend jeweils überlappen. Dabei ist der Außendurchmesser jedes Flansches größer als der Innendurchmesser des unmittelbar in radialer Richtung nachfolgenden Ringflansches. Die gesamte Anordnung der Ringflansche ist am oberen Randbereich der Umlaufwand 9 mit Hilfe eines Ringflansches 9a, der radial nach innen ausgerichtet ist, abgestützt.

Da das Dämpfungsmedium innerhalb der einzelnen Räume, zwischen je zwei Rohren, aufgrund der axialen Abstutzung der Rohre nicht mehr hochsteigen kann, wird eine erhebliche Verbesserung des Langzeitverhaltens erreicht; die Dämpfung bei Belastung in horizontaler Richtung bleibt auch bei großen horizontalen Relativbewegungen praktisch konstant. Bei vertikaler Beanspruchung des Dämpfers wird der Dämpfungswiderstand neben der Viskosität des Dämpfungsmediums in erster Linie durch den Abstand zwischen dem Dämpferstempel 4 und dem innersten Rohr 5 bestimmt. Da vertikale Bewegungen der Rohre 5 bis 8 verhindert sind, ist auch der vertikale Wert des Dämpfungswiderstands bei großen Relativbewegungen konstant.

Die Ausführungsform der Fig. 2 entspricht grundsätzlich derjenigen der Fig. 1. Jedoch sind die unteren Enden der Rohre 5 bis 8 jeweils mittels einer Bodenplatte 5b bis 8b verschlossen, die aufeinanderliegend angeordnet sind, so daß die Rohre mit ihrer jeweiligen Bodenplatte ineinander geschachtelt und ein nach unten geschlossener Ringraum 12a und ferner Ringräume 12b bis 12e gebildet sind. Die Rohre 5 bis 8 können in horizontaler Richtung relativ zueinander frei verschoben werden, sind jedoch in axialer Richtung (in vertikaler Richtung) nicht verschiebbar.

Die Ausführung gemäß Fig. 2 bietet gegenüber derjenigen gemäß Fig. 1 den Vorteil, daß die verschiedenen Räume mit Dämpfungsmedien unterschiedlicher Dämpfungscharakteristik, insbesondere unterschiedlicher Viskosität, gefüllt werden können, so daß sich die Dämpfungswirkung bzw. Dämpfungscharakteristik in weiteren Grenzen verändern und einstellen läßt.

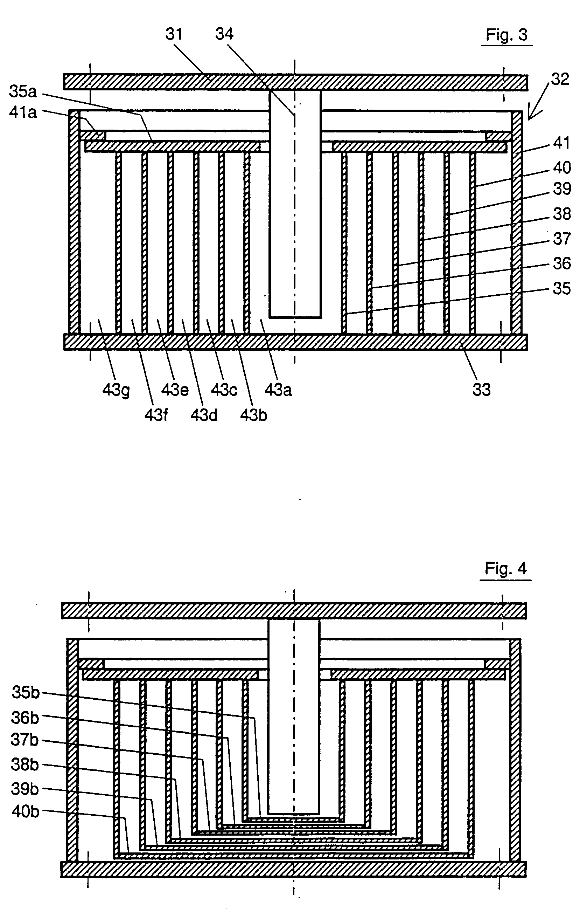

Die Ausführungsform der Fig. 3 entspricht ebenfalls grundsätzlich derjenigen der Fig. 1. Im einzelnen sind dabei bezeichnet die Bodenplatte mit 33, die Umlaufwand mit 41, die Deckplatte mit 31 und der Dämpferstempel mit 34.

Im Dämpfergehäuse 32 sind in diesem Fall sechs Rohre 35 bis 40 konzentrisch zueinander angeordnet. Dabei sind Ringräume 43a-43g zwischen den Rohren 35 bis 40 bzw. der Umlaufwand 41 des Dämpfergehäuses und dem äußersten Rohr 40 sowie zwischen dem Dämpferstempel 34 und dem innersten Rohr 35 ausgebildet.

Bei der Ausführungsform nach Fig. 3 sind alle Rohre 35 bis 40 durch eine gemeinsame obere Platte 35a in axialer Richtung gemeinsam abgestützt, wobei diese Platte 35a wiederum am Dämpfergehäuse 32 über dessen Umlaufwand 41 abgestützt ist. Die Platte 35a ist als Ringscheibe ausgebildet, die so bemessen ist, daß sie mit radialem Spiel im Dämpfergehäuse 32 angeordnet ist. Die Ringscheibe 35a ist mittels eines Ringflansches 41a abgestützt, der am oberen Bereich der Umlaufwand 41 nach innen ausgerichtet ist.

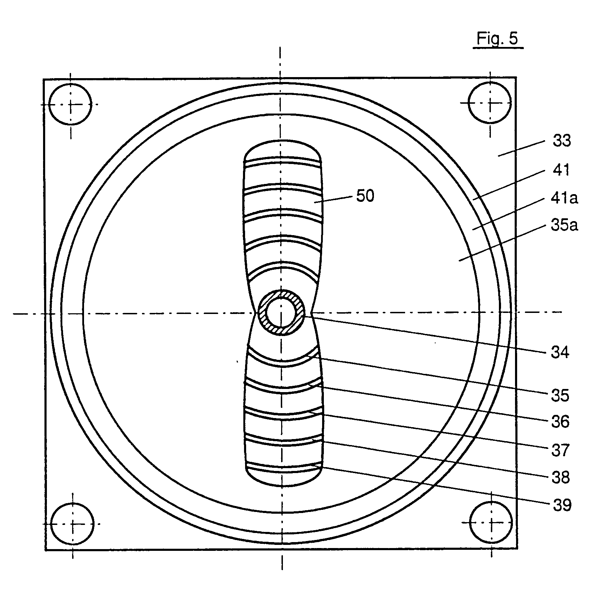

Die Ausführungsform der Fig. 3 zeigt im wesentlichen die gleiche Wirkungsweise wie die Ausführungsform der Fig. 1 bzw. Fig. 2, wobei aber die mögliche Schwingungsamplitude gegenüber den Ausführungsformen der Fig. 1 bzw. 2 wegen der geringen Größe des genannten radialen Spiels zunächst eingeschränkt ist. Große Schwingungsamplituden sind bei der Ausführungsform der Fig. 5 zulässig.

Die Ausführung der Fig. 4 entspricht grundsätzlich derjenigen der Fig. 3. Jedoch sind analog zur Ausführung der Fig. 2 die Rohre 35 bis 40 an ihrem unteren Ende jeweils durch Bodenplatten 35b bis 40b verschlossen, so daß wiederum die Vorteile erreicht sind, wie sie oben in Verbindung mit der Ausführungsform der Fig. 2 erläutert sind.

Die Ausführungsformen der Fig. 3 und 4 zeichnen sich durch eine besonders einfache Konstruktion aus, die aus einfachen Einzelteilen hergestellt werden kann.

Bei den Ausführungsformen der Fig. 2 und 4 kann durch geeignete Wahl der Viskosität der Dämpfungsmedien ein Dämpfungswiderstand W erreicht werden, der sich mit der horizontalen Verschiebung des Dämpferstempels ändert. Auf diese Weise läßt sich bspw. eine wegprogressive Dämpfung realisieren. Die wegprogressive Dämpfung ist im übrigen bei allen Ausführungsformen dadurch weiter beeinflußbar, daß die Radialabstände zwischen den Rohren bei allen Ausführungsformen in Abhängigkeit von der gewünschten Dämpfungscharakteristik und der Viskosität des bzw. der Dämpfungsmedien bemessen werden können.

Bei den Ausführungsformen der Fig. 3 und 4 ist die Platte 35a nicht nur translatorisch bewegbar, sondern auch drehbar gelagert bzw. eingelegt. Bei ovaler bzw. länglicher Gestaltung der Aussparung 50 der Platte 35a bestimmt deren Längenerstreckung den maximal möglichen Horizontalweg des Dämpferstempels 34. Die Breitenerstreckung ist etwas größer als der äußere Durchmesser des Dämpferstempels 34. Bei horizontalen Bewegungen des Dämpferstempels wird auf diese Weise die Platte 35a so gedreht, daß die Längsachse der Aussparung mit der Richtung der Dämpferstempelbewegung übereinstimmt.

Bei allen Ausführungsformen können schließlich beliebig viele Rohre im Inneren des Dämpfergehäuses angeordnet sein. Auch können die Rohre jeweils radiale Durchtrittsöffnungen (nicht gezeigt) für das Dämpfungsmedium aufweisen, deren Größe in Abhängigkeit von der gewünschten Dämpfungscharakteristik bemessen ist.

**Patentansprüche**

1. Horizontal und vertikal wirkender viskoser Schwingungsdämpfer zur Dämpfung von Schwingungen großer Massen mit großen Amplituden, bestehend aus einem mit einem viskosen Dämpfungsmedium gefüllten, topfförmigen Dämpfergehäuse (2; 32), einem in dieses hineinragenden Dämpferstempel (4; 34) und mindestens einem zwischen der Innenwand des Dämpfergehäuses (2; 32) und dem Dämpferstempel (4; 34) angeordneten Rohr (5-8; 35-40), das koaxial und im Abstand zu dem Dämpferstempel (4; 34) angeordnet und parallel zum Dämpfergehäuseboden (3; 33) frei beweglich ist, wobei dem mindestens einen Rohr (5-8; 35-40) an seinem vom Dämpfergehäuseboden (3; 33) abgewandten Ende und der Umlaufwand (9; 41) des Dämpfergehäuses (2; 32) je ein Abstützteil (5a-8a; 41a) zugeordnet ist, mittels dessen das mindestens eine Rohr (5-8; 35-40) in axialer Richtung am Dämpfergehäuse (2; 32) abgestützt ist,
**dadurch gekennzeichnet, daß**
jedes Rohr (5-8; 35-40) zwischen dem der Umlaufwand (9; 41) des Dämpfergehäuses (2; 32) zugeordneten Abstützteil (9a; 41a) und dem Dämpfergehäuseboden (3; 33) angeordnet ist, so daß es in axialer Richtung nicht verschiebbar ist.

2. Dämpfer nach Anspruch 1,
**dadurch gekennzeichnet, daß**
die Abstützteile als horizontale Ringflansche (5a-9a) ausgebildet sind.

3. Dämpfer nach Anspruch 2,
**dadurch gekennzeichnet, daß**
die Rohre (5-8; 35-40) einen unterschiedlichen Durchmesser aufweisen und einander umschließen, wobei der Ringflansch (5a) des innersten Rohres (5) nach außen und alle anderen Ringflansche (8a-9a) nach innen ausgerichtet sind und die Durchmesser der vom jeweiligen Rohr (5-8; 35-40) radial entfernten Umfangsbereiche des jeweils zugehörigen Ringflansches (5a-9a) so bemessen sind, daß der radial entfernte Umfangsbereich jedes Ringflansches gegen den jeweils zugehörigen Umfangsbereich des hierzu benachbarten Ringflansches überlappend anliegt.

4. Dämpfer nach einem der Ansprüche 1 bis 3,
   **dadurch gekennzeichnet, daß**
   die Rohre (5-8; 35-40) mit radialem Abstand voneinander und konzentrisch zum Dämpferstempel (4; 34) angeordnet sind, wobei alle Ringräume (12a-12e; 43a-43g) zwischen den Rohren (5-8; 35-40) bzw. dem innersten Rohr (5; 35) und Dämpferstempel (4; 34) bzw. dem äußersten Rohr (8; 40) und der Umlaufwand (9; 41) des Dämpfergehäuses (2; 32) mindestens teilweise mit viskosem Dämpfungsmedium gefüllt sind.

5. Dämpfer nach mindestens einem der Ansprüche 1 bis 4,
   **dadurch gekennzeichnet, daß**
   die Rohre (5-8; 35-40) radiale Durchtrittsöffnungen für das Dämpfungsmedium aufweisen, deren Größe in Abhängigkeit von der gewünschten Dämpfungscharakteristik bemessen ist.

6. Dämpfer nach Anspruch 4 oder 5,
   **dadurch gekennzeichnet, daß**
   die Radialabstände zwischen dem innersten Rohr (5; 35) und dem Dämpferstempel (4; 34) bzw. zwischen den Rohren (5-8; 35-40) bzw. dem äußersten Rohr (8; 40) und der Umlaufwand (9; 41) des Dämpfergehäuses (2; 32) gleich bemessen sind.

7. Dämpfer nach Anspruch 4 oder 5,
   **dadurch gekennzeichnet, daß**
   die Radialabstände zwischen dem innersten Rohr (5; 35) und dem Dämpferstempel (4; 34) bzw. zwischen den Rohren (5-8; 35-40) bzw. dem äußersten Rohr (8; 40) und der Umlaufwand (9; 41) des Dämpfergehäuses (2; 32) unterschiedlich bemessen sind.

8. Dämpfer nach mindestens einem der Ansprüche 4 bis 7,
   **dadurch gekennzeichnet, daß**
   jedes Rohr (5-8; 35-40) mit einem Boden (58b; 35b-40b) versehen ist, wobei die Böden (5b-8b; 35b-40b) einander benachbarter Rohre (5-8; 35-40) aufeinander aufliegen.

9. Dämpfer nach Anspruch 1,
   **dadurch gekennzeichnet, daß**
   die Abstützteile aller Rohre (35-40) als eine allen Rohren gemeinsame einstückige Ringscheibe (35a) und das Abstützteil der Umlaufwand (41) als nach innen gerichteter Ringflansch (41a) ausgebildet sind, wobei die Durchmesser der einander zugewandten Ränder der Ringscheibe (35a) und des Ringflansches (41a) so bemessen sind, daß beide Teile mit ihren einander radial zugewandten Umfangsbereichen gegeneinander überlappend anliegen.

10. Dämpfer nach Anspruch 9,
    **dadurch gekennzeichnet, daß**
    die einstückige Ringscheibe (35a) eine durch ihr Zentrum geführte längliche Aussparung (50) derart aufweist, daß der Dämpferstempel (4; 34) in Längsrichtung dieser Aussparung (50) entlang großer Horizontalwege bewegbar ist.

**Claims**

1. A horizontally and vertically operative viscous vibration damper for damping vibrations of large masses with large amplitudes, comprising a cup-shaped damper casing (2; 32) which is filled with a viscous damping medium, a damper plunger (4; 34) which projects into the damper casing, and at least one tube (5-8; 3540) which is arranged between the inside wall of the damper casing (2; 32) and the damper plunger (4; 34) and which is arranged coaxially and at a spacing relative to the damper plunger (4; 34) and which is freely movable parallel to the damper casing bottom (3; 33), wherein associated with the at least one tube (5-8; 3540) at its end remote from the damper casing bottom (3; 33) and the peripheral wall (9; 41) of the damper casing (2; 32) is a respective support portion (5a-8a; 41a), by means of which the at least one tube (5-8; 35-40) is supported in the axial direction on the damper casing (2; 32), characterised in that each tube (5-8; 3540) is arranged between the support portion (9a; 41a) associated with the peripheral wall (9; 41) of the damper casing (2; 32), and the damper casing bottom (3; 33), so that it is not displaceable in the axial direction.

2. A damper according to claim 1 characterised in that the support portions are in the form of horizontal annular flanges (5a-9a).

3. A damper according to claim 2 characterised in that the tubes (5-8; 35-40) are of different diameters and surround each other, wherein the annular flange (5a) of the innermost tube (5) is directed outwardly and all other annular flanges (8a-9a) are directed inwardly and the diameters of the peripheral regions, which are radially remote from the respective tube (5-8; 35-40), of the respectively associated annular flange (5a-9a) are of such dimensions that the radially remote peripheral region of each annular flange bears in overlapping relationship against the respectively associated peripheral region of the annular flange adjacent thereto.

4. A damper according to one of claims 1 to 3 characterised in that the tubes (5-8; 35-40) are arranged at a radial spacing from each other and concentrically with respect to the damper plunger (4; 34), wherein all annular spaces (12a-12e; 43a-43g) between the tubes (5-8; 35-40) and the innermost tube (5; 35) and the damper plunger (4; 34) respectively and the outermost tube (8; 40) and the peripheral wall (9; 41) of the damper casing (2; 32) respectively are at least partially filled with viscous damping medium.

5. A damper according to at least one of claims 1 to 4 characterised in that the tubes (5-8; 35-40) have radial through-flow openings for the damping medium, the size of the openings being dependent on the desired damping characteristic.

6. A damper according to claim 4 or claim 5 characterised in that the radial spacings between the innermost tube (5; 35) and the damper plunger (4; 34) and between the tubes (5-8; 35-40) respectively and between the outermost tube (8; 40) and the peripheral wall (9; 41) of the damper casing (2; 32) respectively are the same.

7. A damper according to claim 4 or claim 5 characterised in that the radial spacings between the innermost tube (5; 35) and the damper plunger (4; 34) and between the tubes (5-8; 35-40) respectively and between the outermost tube (8; 40) and the peripheral wall (9; 41) of the damper casing (2; 32) respectively are different.

8. A damper according to at least one of claims 4 to 7 characterised in that each tube (5-8; 35-40) is provided with a bottom (5b-8b; 35b-40b), wherein the bottoms (5b-8b; 35b-40b) of mutually adjacent tubes (5-8; 35-40) lie one upon the other.

9. A damper according to claim 1 characterised in that the support portions of all tubes (35-40) are in the form of a one-piece annular disc (35a) which is common to all tubes and the support portion of the peripheral wall (41) is in the form of an inwardly directed annular flange (41a), wherein the diameters of the mutually facing edges of the annular disc (35a) and the annular flange (41a) are of such dimensions that both parts bear against each other in overlapping relationship with their mutually radially facing peripheral regions.

10. A damper according to claim 9 characterised in that the one-piece annular disc (35a) has an elongate opening (50) through its centre in such a way that the damper plunger (4; 34) is movable in the longitudinal direction of said opening (50) along long horizontal distances.

**Revendications**

1. Amortisseur de vibrations visqueux à action horizontale pour l'amortissement des vibrations de masses importantes de grande amplitude, se composant d'un carter (2 ; 32) d'amortisseur en forme de pot rempli d'agent amortisseur, d'un tampon amortisseur (4 ; 34), pénétrant dans ce dernier, et d'au moins un tube (5-8 ; 35-40) qui est disposé entre la paroi interne du carter (2 ; 32) d'amortisseur et le tampon amortisseur (4 ; 34), ainsi que de manière coaxiale et à distance du tampon amortisseur (4 ; 34), tout en étant librement mobile de manière parallèle par rapport au fond (3 ; 33) du carter d'amortisseur, au moins l'extrémité du tube (5-8 ; 35-40), qui est détournée du fond (3 ; 33) du carter d'amortisseur, ainsi que la paroi circulaire (9 ; 41) du carter (2 ; 32) d'amortisseur étant associées à une pièce de support (5a-8a ; 41a) servant à soutenir au moins le tube (5-8 ; 35-40) axialement contre le carter (2 ; 32) d'amortisseur, caractérisé en ce que chaque tube (5-8 ; 35-40) est disposé entre la pièce de support (9a ; 41a) associée à la paroi circulaire (9 ; 41) du carter (2 ; 32) d'amortisseur et le fond (3 ; 33) du carter d'amortisseur de manière à ne pas se déplacer dans le sens axial.

2. Amortisseur selon la revendication 1, caractérisé en ce que les pièces de support sont conçues commes des flasques annulaires horizontaux (5a-9a).

**3.** Amortisseur selon la revendication 2, caractérisé en ce que les tubes (5-8 ; 35-40) présentent un diamètre différent et s'entourent mutuellement, le flasque annulaire (5a) du tube le plus à l'intérieur (5) étant dirigé vers l'extérieur et tous les autres flasques annulaires (8a-9a) vers l'intérieur, et en ce que les diamètres des zones périphériques du flasque annulaire respectif (5a-9a), zones qui sont éloignées radialement du tube associé (5-8 ; 35-40), sont dimensionnés de façon que la zone périphérique, radialement éloignée de chaque flasque annulaire, s'applique par chevauchement contre la zone périphérique radialement éloignée du flasque annulaire voisin.

**4.** Amortisseur selon l'une des revendications 1 à 3,
caractérisé en ce que
les tubes (5-8 ; 35-40) sont disposés radialement à distance les uns des autres et de manière concentrique par rapport au tampon amortisseur (4 ; 34), tous les espaces annulaires (12a-12e ; 43a-43g) entre les tubes (5-8 ; 35-40) respectivement entre le tube (5 ; 35) le plus à l'intérieur et le tampon amortisseur (4 ; 34) respectivement entre le tube le plus à l'extérieur (8 ; 40) et la paroi circulaire (9 ; 41) du carter (2 ; 32) d'amortisseur étant remplis au moins partiellement d'un agent amortisseur visqueux.

**5.** Amortisseur selon au moins l'une des revendications 1 à 4,
caractérisé en ce que
les tubes (5-8 ; 35-40) présentent, pour l'agent amortisseur, des orifices de passage radiaux dont la taille est dimensionnée en fonction de la caractéristique de l'amortissement souhaité.

**6.** Amortisseur selon la revendication 4 ou 5,
caractérisé en ce que
les distances radiales entre le tube le plus à l'intérieur (5 ; 35) et le tampon amortisseur (4 ; 34) respectivement entre les tubes (5-8 ; 35-40) respectivement entre le tube le plus à l'extérieur (8 ; 40) et la paroi circulaire (9 ; 41) du carter (2 ; 32) d'amortisseur sont de dimensions identiques.

**7.** Amortisseur selon la revendication 4 ou 5,
caractérisé en ce que
les distances radiales entre le tube le plus à l'intérieur (5 ; 35) et le tampon amortisseur (4 ; 34) respectivement entre les tubes (5-8 ; 35-40) respectivement entre le tube le plus à l'extérieur (8 ; 40) et la paroi circulaire (9 ; 41) du carter (2 ; 32) d'amortisseur sont de dimensions différentes.

**8.** Amortisseur selon au moins l'une des revendications 4 à 7,
caractérisé en ce que
chaque tube (5-8 ; 35-40) est muni d'un fond (5-8b ; 35b-40b), les fonds (5-8b ; 35b-40b) des tubes (5-8 ; 35-40), mutuellement voisins, reposant les uns au-dessus des autres.

**9.** Amortisseur selon la revendication 1, caractérisé en ce que
les pièces de support de tous les tubes (35-40) sont conçues comme un disque annulaire (35a) d'un seul tenant commun à tous les tubes et la pièce de support de la paroi ciculaire (41) comme un flasque annulaire (41a) dirigé vers l'intérieur, les diamètres des bords, en vis-à-vis, du disque annulaire (35a) et du flasque annulaire (41a) étant dimensionnés de sorte que les deux pièces s'appliquent, par leurs zones périphériques tournées l'une vers l'autre radialement, l'une contre l'autre par recouvrement.

**10.** Amortisseur selon la revendication 9, caractérisé en ce que
les disques annulaires (35a) d'un seul tenant présentent une encoche (50) allongée passant par son centre et assurant la mobilité du tampon amortisseur (4 ; 34) dans le sens longitudinal de cette encoche (50) le long de grands parcours horizontaux.

Fig. 1

Fig. 2

Fig. 3

Fig. 4

Fig. 5